Europäisches Patentamt

European Patent Office

Office européen des brevets

(19)

(11) **EP 0 814 577 A1**

(12) **DEMANDE DE BREVET EUROPEEN**

(43) Date de publication:
**29.12.1997 Bulletin 1997/52**

(51) Int Cl.6: **H04B 7/26**

(21) Numéro de dépôt: **97401358.3**

(22) Date de dépôt: **16.06.1997**

(84) Etats contractants désignés:
**AT BE CH DE DK ES FI FR GB GR IE IT LI LU MC NL PT SE**

(30) Priorité: **19.06.1996 FR 9607619**

(71) Demandeur: **ALCATEL ESPACE**
**F-92737 Nanterre Cédex (FR)**

(72) Inventeurs:
• **Magnier, Anne**
**75015 Paris (FR)**

• **Cohen, Michel**
**75020 Paris (FR)**
• **Fauve, Hélène**
**75013 Paris (FR)**
• **Michel, Cyril**
**75013 Paris (FR)**
• **Rouffet, Denis**
**92100 Boulogne-Billancourt (FR)**

(74) Mandataire: **Feray, Valérie et al**
**c/o Alcatel Alsthom Recherche IPD,**
**30, avenue Kléber**
**75016 Paris (FR)**

(54) **Unite d'interface pour réseau de radiocommunications avec les mobiles**

(57)    L'invention fournit une unité d'interface pour réseau de radiocommunications avec les mobiles, pour former des signaux à émettre à partir de messages successifs reçus, chaque message véhiculant au moins un paquet élémentaire de canal, et l'unité comprenant, en outre, une pluralité de dispositifs de modulation par code destinés à moduler des paquets de canal reçus par des séquences de codage respectives. L'unité est caractérisée en ce que chaque message véhicule, en outre, des données d'identification et de rang TDMA de canal véhiculé, et en ce qu'elle comprend:

des premiers moyens (382) pour associer à chaque message reçu, en fonction desdites données d'identification et de rang, au moins une information d'identification de canal d'émission identifiant l'un des dispositifs de modulation par code, et
des moyens (380) pour aiguiller le ou les paquets de canal contenu(s) dans ce message vers l'un de dispositifs de modulation par code (32-1..32-M) en fonction de l'information d'identification de canal d'émission.

FIG. 3

## Description

La présente invention concerne de manière générale un réseau de télécommunications. En particulier, l'invention s'applique à un réseau terrestre de communications avec les mobiles ou à un réseau par satellite de communications avec les mobiles.

Selon la technique antérieure, trois principales techniques de transmission sont définies pour véhiculer des communications dans des systèmes à accès multiple destinés à établir des communications avec un nombre élevé d'usagers. Ces techniques sont respectivement dénommées "Accès Multiple à Répartition dans le Temps", "Accès Multiple à Répartition de Fréquence" et "Accès Multiple à Répartition de Code".

Sur la base de ces différentes techniques, plusieurs types de réseau ont été développés qui utilisent l'une spécifique ou une combinaison de ces différentes techniques de transmission. A titre d'exemple, les Recommandations G.S.M de l'ETSI définissent une solution technique d'implémentation d'un réseau cellulaire de radiocommunications avec les mobiles de type TDMA/FDMA combinés. Le choix concernant la technique ou la combinaison de techniques de transmission ont une implication directe sur la réalisation, non seulement des unités de transmission à proprement parlé, à savoir terminaux et stations de base, mais également de la totalité du réseau mobile, hors stations de base. Ainsi, selon la technique antérieure, une partie importante de la totalité de l'infrastructure est définie en fonction du choix qui est fait pour la technique de transmission. Cette solution présente l'inconvénient de développements coûteux pour chaque type de réseau développé, en obligeant les opérateurs à faire des développements importants systématiques pour chaque type de technique de transmission choisie. En corollaire, cela conduit alors à une moindre fiabilité de chaque réseau développé et à une maintenance moins maîtrisée pour chaque réseau.

L'invention vise à remédier à cet inconvénient en fournissant une unité permettant la réutilisation d'une grande partie des infrastructures de réseau existantes utilisant une technique de transmission donnée pour le développement de nouveaux réseaux utilisant une autre technique de transmission.

A cette fin, une unité d'interface pour réseau de radiocommunications avec les mobiles, pour former des signaux à émettre à partir de messages successifs reçus, chacun desdits messages successifs véhiculant au moins un paquet élémentaire de canal, ladite unité comprenant, en outre, une pluralité de dispositifs de modulation par code destinés à moduler des paquets de canal reçus par des séquences de codage respectives, est caractérisée en ce que chaque message véhicule, en outre, des données d'identification de rang de canal TDMA de canal véhiculé, et en ce que ladite unité comprend:

des premiers moyens pour associer à chaque message reçu, en fonction desdites données d'identification, au moins une information d'identification de canal d'émission identifiant l'un des dispositifs de modulation par code, et

des moyens pour aiguiller ledit au moins un paquet de canal dans un message vers l'un desdits dispositifs de modulation par code en fonction de ladite au moins une information d'identification de canal d'émission.

Dans le cas d'un mode d'émission CDMA/TDMA combiné, les premiers moyens pour associer associent, en outre, à chaque message reçu, en fonction des données d'identification, un rang d'intervalle temporel (it1-it4), un canal d'émission étant de type CDMA/TDMA et étant défini par un rang d'intervalle temporel dans une trame et par une séquence de codage.

Selon une réalisation, il peut être prévu que les premiers moyens pour associer associent à au moins deux paquets de canal distincts d'un même canal respectivement au moins deux informations d'identification de canal d'émission distinctes, les deux informations d'identification identifiant un même rang d'intervalle temporel et deux séquences de codage respectives distinctes.

En réception, l'unité de conversion forme des messages à partir de signaux reçus, les signaux étant reçus modulés par code, et est caractérisée en ce qu'elle comprend

une pluralité de dispositifs de démodulation par code destinés à démoduler des paquets de canal dans les signaux reçus par des séquences de codage respectives, et

des seconds moyens pour associer, selon un processus inverse auxdits premiers moyens, à chaque paquet de canal qui est démodulé par code par une séquence de codage, des données de rang de canal TDMA, et

des moyens pour former un message incluant ledit paquet de canal et lesdites données de rang de canal TDMA .

Selon une réalisation avantageuse, les messages de données successifs sont reçus en provenance d'un contrôleur de station de base d'un réseau de type G.S. M, pour être émis en mode à accès multiple à division de code.

Il peut être prévu en outre que les premiers moyens associent à chaque message reçu au moins une information d'identification de canal d'émission, en fonction en outre d'une information d'identification d'émetteur/récepteur, dit TRX en GSM.

D'autres caractéristiques et avantages de la présente invention apparaîtront plus clairement à la lecture de la description suivante, en référence aux dessins annexés correspondants, dans lesquels :

- la figure 1 représente, sous forme schématique, un réseau de télécommunications avec les mobiles mettant en oeuvre l'invention;

- la figure 2 est un bloc-diagramme d'une station de base formant partie du réseau de la figure 1;
- la figure 3 est un bloc-diagramme détaillé d'une unité d'aiguillage selon l'invention;
- les figures 4A et 4B forment ensemble un bloc-diagramme détaillé des circuits de modulation d'émission inclus dans la station de base;
- les figures 5 et 6 forment ensemble un bloc-diagramme détaillé des circuits de démodulation de réception inclus dans la station de base;
- la figure 7 est un bloc-diagramme général d'un terminal destiné à établir des communications à travers le réseau de la figure 1;
- la figure 8 est un bloc-diagramme détaillé d'une unité de réception inclus dans le terminal de la figure 7;
- la figure 9 est un bloc-diagramme de chacun des circuits de démodulation CDMA inclus l'unité de réception de la figure 8;
- la figure 10 est un bloc-diagramme détaillé d'une unité d'émission inclus dans le terminal de la figure 7;
- la figure 11 est un bloc-diagramme de chacun des circuits de modulation CDMA inclus l'unité d'émission de la figure 10;
- la figure 12 représente un motif de trame GSM;
- la figure 13A montre des trames modulées par des séquences respectives orthogonales entr'elles formées à partir de trames GSM;
- la figure 13B montre une supertrame formée par une pluralité de trames successives modulées par une même séquence parmi ; et
- la figure 14 montre un format de message à l'interface Abis d'un réseau de type GSM.

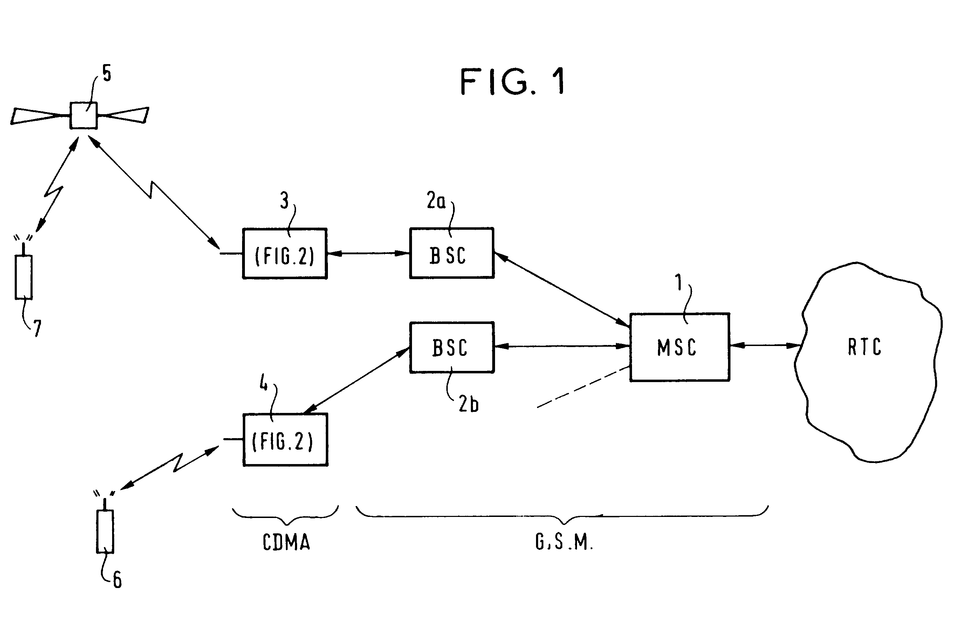

En référence à la figure 1, selon une réalisation, l'infrastructure d'un réseau de radiocommunications avec les mobiles pour la mise en oeuvre de l'invention, comprend, d'une part, un commutateur du service mobile, ou MSC, 1 raccordé à travers des liaisons MIC au Réseau Téléphonique Commuté RTC et des contrôleurs de stations de base 2a, 2b, supposés ici de type GSM, et, d'autre part, des stations de base 3, 4. Le Commutateur du Service Mobile est chargé de l'acheminement des communications en provenance de et vers les mobiles, dans une zone géographique donnée. Les contrôleurs de station de base 2a, 2b reliés à un Commutateur du Service mobile sont des commutateurs locaux des communications, assurant par ailleurs une fonction de pilotage d'une ou plusieurs stations de base 3, 4. Les stations de base 3, 4 assurent l'émission/réception radio des communications vers/en provenance des mobiles 6, 7. Une émission radio entre une station de base et un mobile peut être établie directement, dans le cas d'un réseau terrestre, ou via un satellite relais 5, dans le cas d'un réseau par satellite. De plus amples informations concernant les réseaux GSM sont fournies dans l'ouvrage "The GSM System for Mobile Communications" de Michel MOULY et Marie-Bernadette PAUTET, publié par les auteurs, Edition 1992 ainsi que dans les Recommandations ETSI relatives au GSM.

L'invention propose d'utiliser des stations de base 3, 4 utilisant un mode de fonctionnement au moins partiellement CDMA, le reste de l'infrastructure, à savoir les contrôleurs de station de base 2a, 2b et les commutateurs du Service mobile 1, utilisant avantageusement les éléments des réseaux existants, tels que GSM.

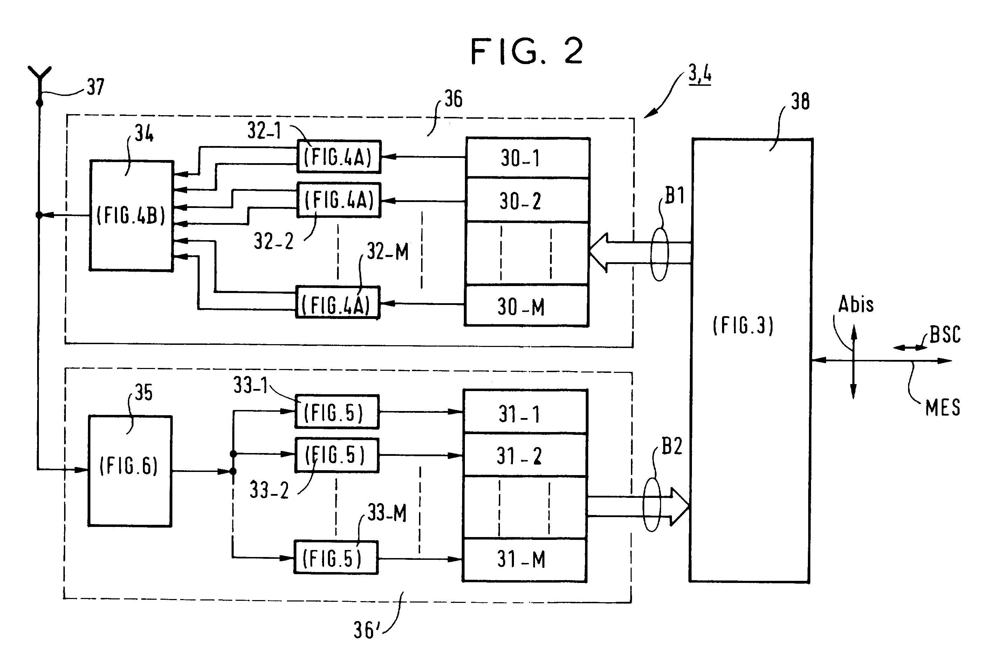

En référence à la figure 2, une station de base 3, 4 mettant en oeuvre l'invention comprend une unité d'aiguillage et de formation de message 38, une chaîne d'émission 36, une chaîne de réception 36' et une antenne 37. Une sortie de la chaîne d'émission 36 et une entrée de la chaîne de réception 36' sont couplées à l'antenne 37.

La chaîne d'émission 36 comprend M files d'attente d'émission 30-1 à 30-M dont des sorties respectives sont appliquées à des entrées de M unités de modulation par code 32-1 à 32-M. Les sorties respectives des M unités de modulation par code 32-1 à 32-M sont appliquées à une entrée d'une unité d'émission radio 34. La chaîne de réception 36' comprend une unité de réception radio 35 dont une sortie s'applique à M unités de démodulation par code 33-1 à 33-M, et M files d'attente de réception 31-1 à 31-M dont des entrées reçoivent les sorties respectives des M unités de démodulation par code 33-1 à 33-M.

L'unité d'aiguillage et de formation de message 38 est couplée, d'une part, aux M entrées respectives des files d'attente 30-1 à 30-M à travers un premier bus B1 et, d'autre part, aux M sorties respectives des files d'attente 31-1 à 31-1 à travers un second bus B2. Cette unité 38 est fournie ici pour coupler, ou interfacer, un contrôleur de station de base de type G.S.M 2a, 2b aux chaînes d'émission et de réception 36 et 36' opérant au moins partiellement en CDMA; elle est donc localisée au niveau définie en G.S.M par l'interface Abis entre contrôleur de station de base G.S.M et station de base G.S.M.

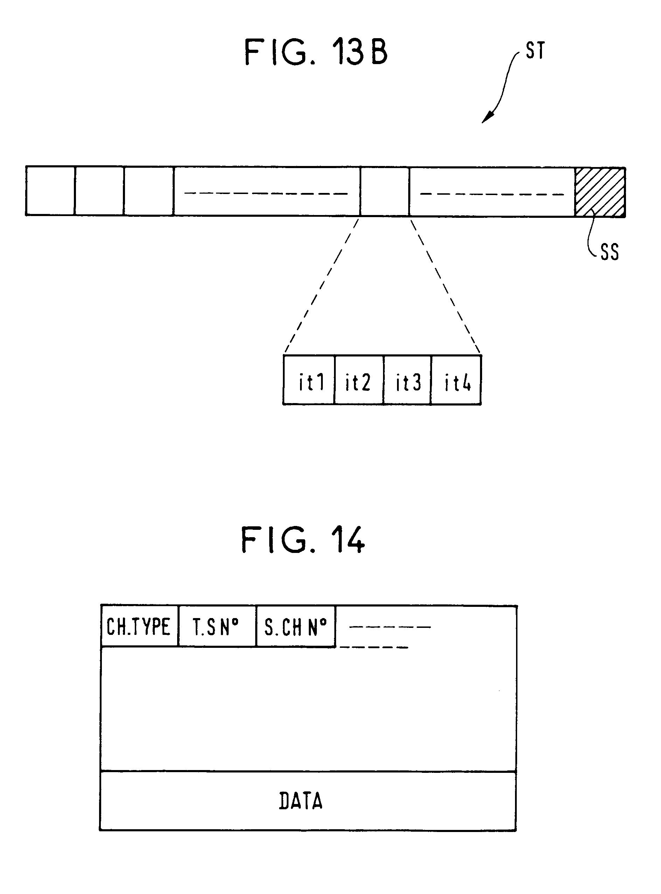

Comme montré dans la figure 14, l'interface Abis définit un format de message particulier pour les messages transmis et reçus par un contrôleur de station de base 2a, 2b. Chaque message est relatif à un canal, ou sous-canal, particulier et possèdent plusieurs champs dont un champ identifiant le type de canal véhiculé "CH. TYPE", un champ identifiant le rang "TS-n°" de l'intervalle temporel dans la trame TDMA véhiculant ce canal, et éventuellement le rang "SC n°" d'un sous-canal à l'intérieur d'un canal, et enfin un champ de données utiles "DATA". Une information particulière d'identification d'un émetteur/récepteur "TRX" dans une station de base destinataire d'un message donné est portée par le niveau LIAISON, au sens des Recommandations OSI de l'ISO. La définition d'un TRX est donnée à la page 212 de l'ouvrage "The GSM System for Mobile Communications" de Michel MOULY et Marie-Bernadette PAUTET, publié par les auteurs, Edition 1992.

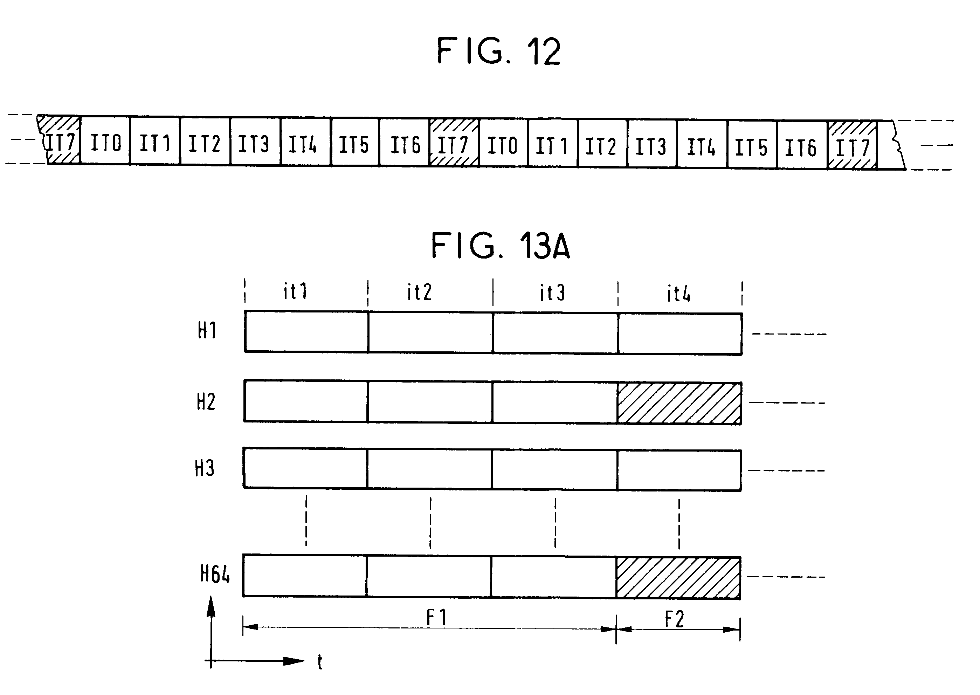

Comme montré dans la figure 12, dans le G.S.M, la structure élémentaire de support de transmission radioélectrique des données est appelée "trame". Une telle trame est définie par 8 intervalles temporels multiplexés IT0-IT7, qui sont répétés avec la périodicité de la trame. Chaque intervalle temporel est destiné à véhiculer un canal ou plusieurs sous-canaux. Dans le G.S.M, quatre types de canal sont distingués, à savoir les canaux de trafic (TCH en littérature anglo-saxonne pour Traffic CHannel), les canaux dédiés (DCCH en littérature anglosaxonne pour Dedicated Control CHannel), les canaux de contrôle commun (CCCH en littérature anglo-saxonne pour Common Control CHannel) et les canaux de diffusion d'informations générales (BCCH en littérature anglo-saxonne pour Broadcast Control CHannel). Certains canaux, par exemple les canaux dédiés DCCH et les canaux de diffusion d'informations générales BCCH véhiculent chacun des sous-canaux, tels que les sous-canaux SACCH (Slow Associated Control CHannel) pour les canaux DCCH ou les sous-canaux SCH (Synchronisation Channel) pour les canaux BCCH. Les motifs d'apparition des données, sous la forme de bursts, dans des intervalles temporels, ou portions d'intervalles temporels, pour former un canal, ou un sous-canal, sont définies d'une manière très particulière dans le cadre du G.S.M, avec des structures de supertrame, hypertrame, etc...

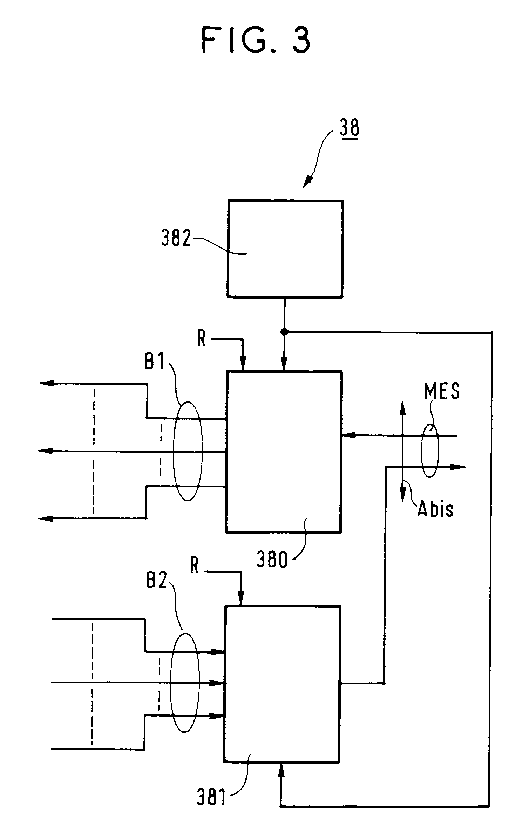

Comme montré dans la figure 3, l'unité 38, recevant des messages au format de la figure 13, comprend un circuit d'aiguillage 380, une table d'association 382 et un circuit de formation de message 381. Le bus de sortie B1 du circuit d'aiguillage 380 comprend M liaisons appliquées aux M entrées respectives des files d'attente 32-1 à 32-M. Les messages MES reçus en provenance du contrôleur de station de base sont appliqués à une entrée du circuit d'aiguillage 380. L'unité d'aiguillage 380 aiguille en conséquence le ou les paquet(s) de données utiles DATA contenu(s) dans un message MES vers celle des files d'attente 30-1 à 30-M qui est associée, dans la table d'association 382, aux informations :

(a) - de rang "TS-n°" de l'intervalle temporel dans la trame véhiculant ce canal, ou éventuellement rang "SC n°" d'un sous-canal à l'intérieur d'un canal, qui sont portées par le message MES, et éventuellement
(b) - d'identification de TRX,
qui est portée par le niveau LIAISON du protocole d'échange des messages MES.

Dans le cas ou la station de base 3, 4 fonctionne en mode combiné CDMA/TDMA selon la réalisation décrite ci-après, la table d'association 382 peut associer aux informations précitées, outre le rang d'une file d'attente identifiant une unité de modulation par code donnée, un rang d'intervalle temporel dans une trame. Dans ce cas, l'unité d'aiguillage est synchronisée sur la fréquence d'apparition des trames et intervalles temporels dans la trame pour transmettre des paquets de données dans les files d'attente 30-1 à 30-M à des instants respectifs synchronisés avec les instants d'apparition des intervalles temporels dans une trame.

En outre, avantageusement, pour des raisons qui seront développées ultérieurement, il peut être prévu que la table d'association associe à tout message dont le champ "CH. TYPE" identifie une information de canal BCCH ou CCCH, une file d'attente donnée, et cela indépendamment de l'information véhiculée dans le champ de rang d'intervalle temporel. Par ailleurs, cette même table peut associer à tout message dont le champ "CH. TYPE" identifie une information de canal TCH, et le champ "TS n°" identifie le 7ème intervalle temporel IT7, la 3ème file d'attente.

En pratique, comme cela va maintenant être décrit plus en détail, cette association entre des informations portées par les champs " "TS n°", "SC n°", "CH. TYPE" et "TRX" et les files d'attente 30-1 à 30-M dépend des ressources d'émission qui sont allouées par la chaîne d'émission 36. Ainsi à titre d'exemple, dans le cas ou cette chaîne fonctionne en mode CDMA selon lequel à chaque canal est associée une séquence PN différente, la capacité totale sera égale au débit en bande de base de chaque canal (qui est modulé par une séquence PN respective) multiplié par le nombre de séquences PN. Pour un autre exemple dans lequel la chaîne fonctionne en mode combiné CDMA/TDMA, selon lequel à chaque canal est associée une séquence parmi une pluralité de séquences orthogonales et un intervalle temporel de trame, la capacité totale sera égale au débit en bande de base d'un canal (occupant un intervalle temporel par trame) modulé par les séquences orthogonales, multiplié par le nombre de séquences et par le nombre d'intervalles temporels dans une trame. Une adéquation doit exister entre la capacité de débit total à transmettre et les ressources d'émission fournies par la chaîne d'émission, et l'unité 38 est chargée de l'aiguillage de chaque canal vers une ressource particulière en associant préalablement aux informations véhiculées dans les messages reçus MES, des informations d'identification de canaux d'émission.

Ainsi, de manière schématique, la fonction d'association définie par la table d'association 382 est donnée de la manière suivante:

(TS-n°, SC n°, TRX) ou ("CH tYPE", TS-n°, SC n°, TRX) → (PN) en mode d'émission CDMA, où PN désigne une séquence PN;

ou par :

(TS-n°, SC n°, TRX) ou (TS-n°, SC n°, TRX, "CH TYPE") → (Hm) en mode d'émission CDMA, où Hm désigne l'une d'une pluralité de séquences orthogonales entr'elles, pour une solution du type décrit dans le brevet US-A-5 103 459;

ou encore par :

(TS-n°, SC n°, TRX) ou (TS-n°, SC n°, TRX, "CH TYPE") → (Hm, ITj) en mode combiné TDMA/CDMA, ou Hm désigne l'une d'une pluralité de séquences orthogonales entr'elles, et ITj désigne un intervalle temporel donné, pour une solution du type décrit dans la réalisation préférée qui va suivre.

Les données d'association mémorisées dans la table d'association 382 sont, en outre, utilisées pour l'allocation d'un canal à un mobile. Ainsi, un canal GSM alloué par l'infrastructure à un mobile sera traduit en un canal CDMA. Un messsage véhiculant une information d'identification de ce canal CDMA sera émis à destination du mobile lors de l'allocation de ce canal au mobile.

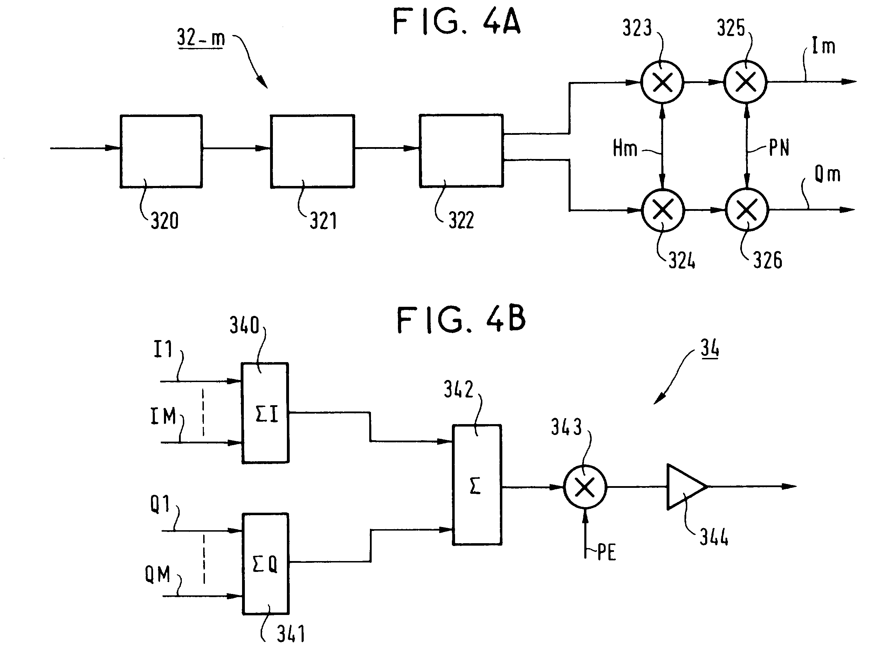

Comme montré dans la figure 4A, dans la réalisation décrite, chaque unité de modulation 32-m, m compris entre 1 et M, comprend en cascade un circuit de codage convolutionnel 320, un circuit d'entrelacement 321, un circuit de modulation de phase QPSK 322, et sur chacune de deux voies parallèles, deux multiplieurs identifiés par les repères 323 et 325 pour l'une des deux voies, et par les repères 324 et 326 pour l'autre des deux voies. Le circuit de codage 320 est un codeur convolutionnel, par exemple de type Viterbi de longueur de contrainte K=7 et de rapport r = 1/2. Il a pour fonction de mettre en oeuvre un codage qui offre une garantie de la qualité de la liaison. Un tel circuit de codage est bien connu de l'homme de l'art. Les paquets de données en bande de base issus de la file d'attente 30-m sont donc modulés par code par le circuit de modulation 32-m, puis entrelacées par le circuit 321. Le signal résultant entrelacé est modulé en phase QPSK (Quadrature Phase Shift keying) par le circuit 322. Ce dernier 322 produit deux composantes de signal en quadrature qui sont chacune appliquée aux deux multiplieurs 323, 325 et 324, 326 de la voie considérée.

Dans la réalisation décrite ici, le fonctionnement du réseau est tel que tous les signaux émis à l'intérieur d'une cellule (réseaux terrestres) ou d'un faisceau (réseaux par satellite) utilisent une même séquence PN (pseudo-noise) qui est différente d'une séquence PN utilisée par une cellule, ou faisceau, voisin(e). A l'intérieur d'une cellule, un signal à destination d'une station, tel que terminal, particulière est en outre codé par un séquence particulière qui est orthogonale aux séquences utilisées pour les signaux à destination d'autres stations dans la même cellule ou le même faisceau.

Typiquement, les séquences PN consistent en des séquences pseudo-aléatoires identiques qui sont décalées temporellement entr'elles pour des cellules distinctes. Les séquences orthogonales sont par exemple des fonctions de Walsh, également connues sous les termes de "séquences de Hadamard".

Les séquences de Hadamard sont obtenues à partir d'une matrice de Hadamard de rang M, M étant une puissance de 2, telle que:

$$\mathrm{H}(M) = \begin{pmatrix} H(M/2) & H(M/2) \\ H(M/2) & -H(M/2) \end{pmatrix},$$

avec

$$\mathrm{H}(2) = \begin{pmatrix} 1 & 1 \\ 1 & -1 \end{pmatrix}$$

Une séquence de Hadamard Hm, m compris entre 1 et M, est l'une respective des lignes M de la matrice de Hadamard. Une matrice de Hadamard de rang M contient donc M séquences, chacune ayant une longueur de M bits. Les séquences de Hadamard d'ordre M possèdent la propriété que sur un intervalle de M symboles, la corrélation entre les différentes séquences est nulle, étant entendu que ces différentes séquences sont alignées temporellement. Cela résulte du fait que chaque séquence diffère de toute autre séquence pour la moitié des bits qui la composent.

En revenant à la figure 4A, pour l'unité de modulation 32-m, les deux composantes de signal modulé QPSK en quadrature sont toutes deux multipliées par une séquence de Hadamard Hm de rang m et par une séquence PN associée à la station de base 3, 4 considérée, pour produire deux signaux en quadrature modulés par code Im et Qm. Comme montré dans la figure 4B, dans l'unité d'émission radio 34, les différents signaux en quadrature Im et Qm, m compris entre 1 et M, issus des différentes unités de modulation par code 32-1 à 32-M sont additionnés au moyen d'additionneurs 340, 341 et 342. Le signal d'addition résultant est modulé par une porteuse d'émission PE avant d'être amplifié par un amplificateur 344 pour être émis à travers l'antenne 37.

Ce signal, émis à travers l'antenne 37, est tel que représenté dans la figure 13. Il utilise par exemple un motif élémentaire de trame à quatre intervalles temporels it1-it4 qui se répètent à la fréquence de trame. Un signal de trame donné est associé à une séquence de Hadamard respective Hm, m étant par exemple compris entre 1 et 64, la matrice de Hadamard choisie étant de rang M=64. Un canal d'émission dans le réseau décrit ici et défini par un intervalle temporel itj, j compris entre 1 et 4, et une séquence de Hadamard Hm, correspond par son contenu, sauf cas particulier, à un canal TDMA dans le GSM. De manière très avantageuse, le trafic BCCH est véhiculé par les canaux associés à une séquence de Hadamard donnée, telle que H0. La table d'association 382 réalise donc cette correspondance. Dans la GSM, les canaux de trafic, dits full-rate, notés TCH/F qui sont reçus par l'unité d'aiguillage 38 sont tels qu'ils occupent un intervalle de même rang dans chaque trame GSM successive de 8 intervalles temporels. Pour ces canaux TCH/F, de manière avantageuse, en se référant au brevet américain US-A- 5 373 502 au nom de ALCATEL.N.V, la table d'association 382 associe à un intervalle temporel sur deux un canal défini par un intervalle temporel itj de la trame montrée dans la figure 13 et une séquence de Hadamard Hm et à l'autre de ces deux intervalles temporels, le même intervalle temporel itj de la trame mais une séquence de Hadamard Hm' distincte de Hm. Ainsi le canal TCH/F est reçu par une station distante par moitié codée sur deux séquences de Hadamard distinctes mais sur un même intervalle temporel.

Comme montré dans la figure 13B, la structure de trame élémentaire montrée à la figure 13A s'inscrit dans une structure de supertrame constituée de N trames élémentaires, (N-1) de ces trames véhiculant le contenu des canaux GSM, et une trame véhiculant des données de synchronisation PN. Il est rappelé que l'allocation d'un canal de type CDMA ou CDMA/TDMA combiné par la table d'association à un canal GSM peut être quelconque, sauf pour ce qui concerne les canaux de signalisation BCCH et CCCH qui devront de préférence être modulées par une même séquence de Hadamard. De même avantageusement, les canaux de trafic full-rate seront divisés, pour un intervalle temporel sur deux, sur une séquence de Hadamard et pour l'autre de ces intervalles temporels sur une autre séquence de Hadamard, en utilisant un même intervalle temporel d'émission.

Comme montré dans la figure 13B, pour chacune des séquences de Hadamard, les trames sont combinées en supertrames ST comprenant K trames élémentaires, K étant un nombre entier. Ces supertrames définissent des motifs périodiques de répartition des canaux. En outre, chaque supertrame ST comprend une séquence d'acquisition SS. La séquence d'acquisition SS est émise une fois pendant une durée donnée pour chaque supertrame produite. Elle est émise par chaque unité de modulation 32-1 à 32-M en subissant uniquement la modulation de code PN, et aucune modulation par séquence de Hadamard. En résultat, une station réceptrice distante recevra dans l'intervalle temporel coïncidant avec la séquence SS, cette séquence SS avec une puissance M fois supérieure à la puissance normalement reçue pour l'un des canaux d'émission défini dans notre réalisation par un intervalle temporel est une séquence de Hadamard.

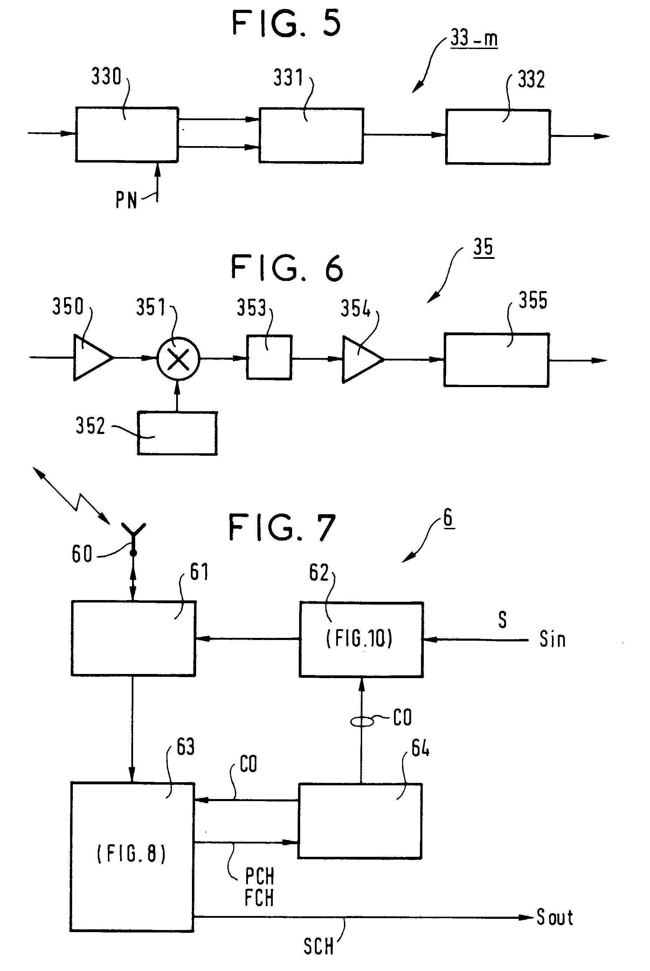

Les supertrames ainsi produites sont reçues par une station réceptrice 6, par exemple un terminal, montrée à la figure 7. Le terminal 6 comprend un duplexeur 61 qui est relié à une antenne, et dont une entrée est connectée à une sortie d'une unité d'émission 62, et dont une sortie est appliquée à une entrée d'une unité de réception 63. La station réceptrice comprend, en outre, une unité centrale 64.

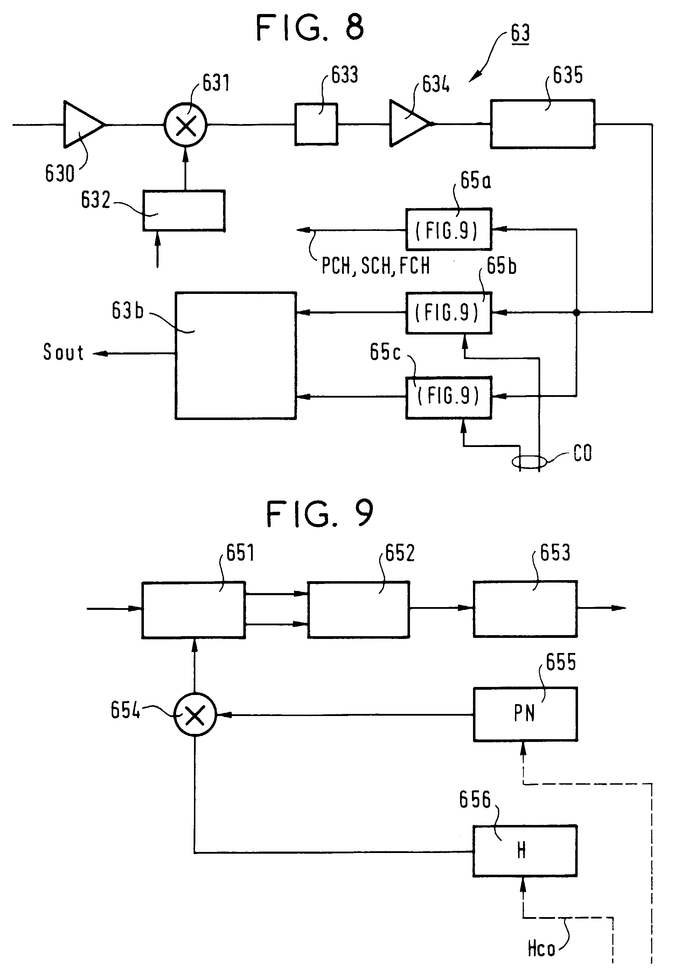

En référence à la figure 8, l'unité de réception 63 du terminal 6,7 comprend un amplificateur RF 630, un multiplieur 631, un générateur de porteuse 632, un filtre passe-bande 633, un amplificateur IF 634, un convertisseur analogique/numérique 635, 3 unités de démodulation de code 65a-65c et un circuit de démultiplexage-retard 636. Le signal d'addition modulé par une porteuse d'émission PE pour être émis à travers l'antenne 37 par la station 2a, 2b est reçu par l'antenne 60 du terminal 6. Ce signal d'addition modulé reçu est amplifié RF par l'amplificateur 630, puis démodulé par la porteuse de démodulation produite par le générateur 632, filtré passe-bande dans le filtre 633, amplifié IF dans l'amplificateur 634, puis converti en un signal d'addition numérique par le convertisseur 635.

Ce signal d'addition numérique est appliqué en parallèle à trois entrées respectives des trois unités de démodulation de code 65a-65c. Comme montré dans la figure 9, chaque unité de démodulation de code comprend un corrélateur PN/QPSK 651, un détecteur de phase 652, un décodeur de convolution 653, un générateur de séquence PN 655, un générateur de séquence d'Hadamard 656 et un multiplieur 654. Une première entrée du corrélateur 651 reçoit le signal d'addition numérique issu du convertisseur 635, et une seconde entrée dudit corrélateur 651 reçoit le signal résultant de la multiplication des séquences PN et de Hadamard respectivement produites par les générateurs 655 et 656. Le corrélateur produit deux signaux en quadrature appliqués à une entrée du détecteur de phase 652 dont une sortie est reliée à une entrée d'un décodeur de convolution 653 assurant un décodage par treillis du codage de Viterbi.

La séquence d'acquisition SS est reçue, codée par la séquence PN, avec une puissance égale à M fois la puissance d'un canal pris seul, tel que canal de traffic. Lors de l'initialisation du terminal, le générateur de séquence de Hadamard 656 dans le démodulateur de code 65a produit une séquence de Hadamard avec tous les bits à "1". Cela permet au corrélateur de s'affranchir de la modulation par séquence de Hadamard Hm pour acquérir la synchronisation PN. Cette synchronisation PN est obtenue au moyen du corrélateur 651, de manière connue.

A l'issue de cette acquisition de synchronisation PN, le générateur de séquence de Hadamard 656 dans le démodulateur de code 65a est commandé pour produire une séquence de Hadamard prédéfinie. Cette séquence de Hadamard prédéfinie est la séquence, par exemple H0, modulant par code les canaux BCCH et CCCH. En résultat, elle produit, en sortie, par démodulation de code, les diverses informations, véhiculées par exemple dans les canaux communs PCH, SCH et FCH qui sont appliquées à une entrée de l'unité centrale 64. En fonction de ces informations, l'unité centrale 64 assure des fonctions de synchronisation temporelle (SCH), fréquentielle (FCH) pour la correction de la fréquence du générateur 632, et de détection d'appel entrant (PCH). Le contenu des messages portés par le canal PCH d'appel des mobiles est modifié de sorte à y inclure, outre l'adresse du mobile appelé, le canal, défini par la ou les séquence(s) de Hadamard et le ou les rang(s) d'intervalle temporel parmi les intervalles temporels it1 à it4 de trame, qui véhicule(nt) une communication à établir ainsi que la signalisation associée.

L'unité centrale 64 pilote en conséquence, par des signaux de commande CO, les unités d'émission et de réception 62 et 63 pour synchroniser les réception et émission de la communication sur le(s) rang(s) d'intervalle temporel et la ou les séquences de Hadamard identifié par le canal PCH. L'une des deux ou les deux unités de démodulation par code 65b et 65c ont alors pour fonction de démoduler par code la communication reçue. Les deux unités sont utilisées lorsqu'est mise en oeuvre la solution décrite dans le brevet précité US-A-5 373 502. Dans ce cas, les signaux produits aux sorties respectives des deux unités 65b et 65c seront combinés dans un circuit 636 pour produire un unique signal Sout reconstituant le signal original en bande de base transmis.

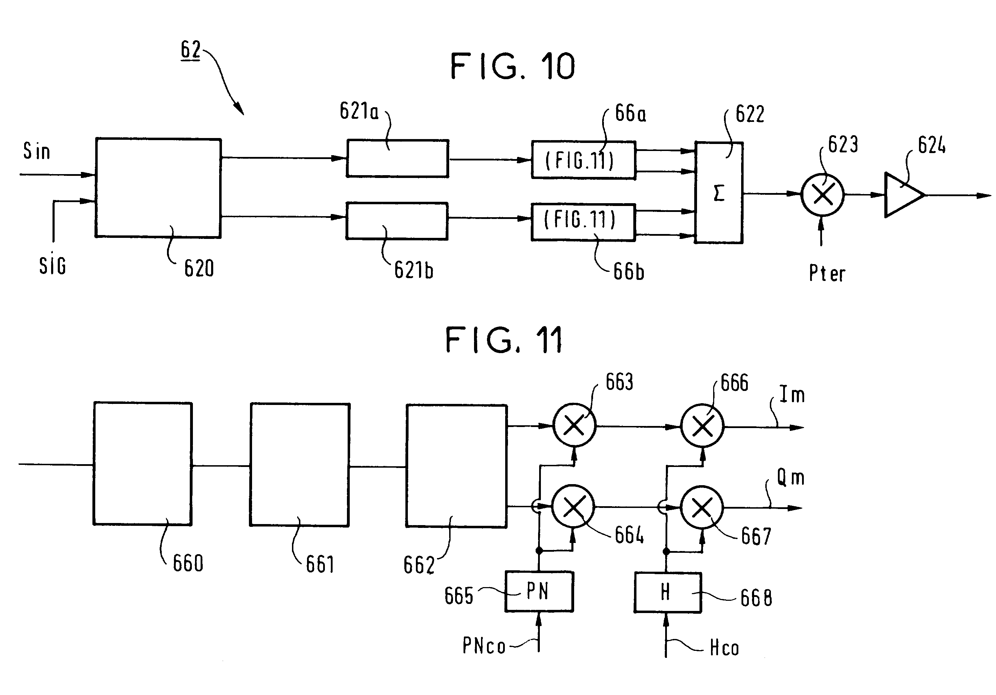

En référence aux figures 10 et 11, l'unité d'émission du terminal 6, 7 comprend un circuit d'aiguillage 620, deux files d'attente 621a et 621b, deux unités de modulation 66a et 66b, un additionneur 622, un multiplieur 623, et un amplificateur RF 624. L'utilisation de deux files d'attente 621a et 621b et unités de modulation associées 66a et 66b résulte de la mise en oeuvre de la solution décrite dans le brevet US-A- 5 373 502. L'unité d'aiguillage 620 aiguille la signalisation SIG et le signal en bande de base de communication Sin vers la file d'attente appropriée en fonction du canal destiné à véhiculer ces informations. Ces informations sont codées 660, entrelacées 661, modulées en phase QPSK 662, puis modulées en séquences PN 663-665 et Hadamard 666-668. Les séquences Hadamard produites dans les deux unités de modulation 66a et 66b sont distinctes entr'elles. Les signaux modulés par code issus des deux unités de modulation 66a et 66b sont sommés par l'additionneur 622, et le signal d'addition résultant est modulé par une porteuse d'émission avant d'être amplifié par l'amplificateur 624 pour émission à travers le duplexeur et l'antenne du terminal 6, 7.

En revenant à la figure 2 et en référence aux figures 3, 5 et 6, il est maintenant décrit le fonctionnement en réception par la station de base, des signaux émis par les différents mobiles 6, 7 d'une cellule, ou faisceau. Il est préalablement souligné que les mobiles sont synchronisés en émission selon la procédure de réglage de l'instant d'émission, dite du "timing advance" en G.S.M. Pour cela, avant établissement d'une communication, un mobile déclenche une émission sur le canal RACH relativement à la synchronisation qu'il a reçue de la station de base. Cette émission permet à la station de base de mesurer le double du temps de propagation mobile-station de base. En réponse, la station de base alloue au mobile un canal SACCH dans lequel est véhiculée une information d'avance temporelle que le mobile doit donner à son horloge par rapport à ce qu'il croit être l'horloge de la station de base, de sorte que les données ultérieurement émises par le mobile coïncident avec un intervalle temporel donné de la trame. L'information d'avance temporelle devra dans notre réalisation posséder une précision bien supérieur à celle du G.S.M, pour tenir compte de la modulation CDMA. Un nombre de bits supérieur à ceux définis à cette fin dans le GSM sera donc utilisé dans le SACCH.

La station de base reçoit donc les différents canaux sur des intervalles temporels parfaitement synchronisés, et modulées par des séquences de Hadamard, tel que cela est montré dans la figure 14.

Comme montré dans la figure 6, ces différents signaux sont successivement amplifiés RF par un amplificateur 350, démodulés par une porteuse de démodulation produite par un générateur 352, filtrés par un filtre passe-bande 353, amplifiés BF 354, et subissent finalement une conversion analogique/numérique 355. Le signal composite issu du convertisseur analogique/numérique 355 est appliqué aux entrées respectives des unités de démodulation par code 33-1 à 33-M. Chaque unité de démodulation par code 33-m, m compris entre 1 et M, comprend en cascade un corrélateur QPSK/PN 330, une transformée de Hadamard rapide Hm et un décodeur de convolution 332. La transformée de Hadamard rapide opère pour la séquence Hm. En sortie d'un décodeur de convolution 332 de l'une des unités de démodulation par code 33-m, est produit le signal en bande de base correspondant aux trames "portées" par l'une respective des séquences de Hadamard Hm, m compris entre 1 et M=64 dans la figure 13A.

Dans l'unité d'aiguillage et de formation de message 38, le circuit de formation de message 381, reçoit dans le bus B2, à travers les files d'attente respectives 31-1 à 31-M, ces différents signaux en bande de base. Le circuit 38 est synchronisé sur la période d'intervalle temporel et de trame, et associe à chaque paquet de canal issu de chaque démodulateur par code, des données d'identification et de rang de canal TDMA, d'identification d'émetteur/récepteur TRX selon le format GSM.

Ainsi, à titre d'exemple, tout intervalle temporel itj de rang j=2 reçu en provenance de la $m^{ème} = 6^{ème}$ file d'attente se verra associer un champ "CH. TYPE" identifiant une information de canal TCH, et un champ de rang "TS n°" identifiant le 7ème intervalle temporel IT7. Le circuit de formation de message forme alors un message incluant le paquet de données véhiculé dans l'intervalle temporel considéré et les informations d'identification et de rang de canal TDMA. Ces messages sont alors transmis à destination du contrôleur de station de base 2a, 2b.

De manière générale, en réception, la fonction d'association opère selon un processus d'association inverse au processus d'association en émission. Ainsi, en réception, la fonction d'association définie par la table d'association 382 est donnée par:

(PN) → (CH. TYPE, TS-n°, SC n°, TRX) en mode

EP 0 814 577 A1

réception CDMA, où PN désigne une séquence PN particulière, pour une solution du type décrite dans le brevet US-A-4 901 307;

ou par :

(Hm) → (CH. TYPE, TS-n°, SC n°, TRX) en mode réception CDMA, où Hm désigne l'une d'une pluralité de séquences orthogonales entr'elles, pour une solution du type décrit dans le brevet US-A-5 103 459;

ou encore par :

(Hm, ITj) → (CH. TYPE, TS-n°, SC n°, TRX) en mode combiné TDMA/CDMA, ou Hm désigne l'une d'une pluralité de séquences orthogonales entr'elles, et ITj désigne un intervalle temporel donné, pour une solution du type décrit dans la réalisation préférée qui précède.

## Revendications

1. Unité d'interface pour réseau de radiocommunications avec les mobiles, pour former des signaux à émettre à partir de messages successifs reçus (MES), chacun desdits messages successifs véhiculant au moins un paquet élémentaire de canal (DATA), ladite unité comprenant, en outre, une pluralité de dispositifs de modulation par code (32-1.. 32-M) destinés à moduler des paquets de canal reçus par des séquences de codage respectives (PN; Hm),

caractérisée en ce que chaque message véhicule, en outre, des données d'identification de rang de canal TDMA (TS N°, SC N°) de canal véhiculé, et

en ce que ladite unité comprend:

des premiers moyens (382) pour associer à chaque message reçu, en fonction desdites données d'identification, au moins une information d'identification de canal d'émission identifiant l'un des dispositifs de modulation par code (32-1..32-M), et

des moyens (380) pour aiguiller ledit au moins un paquet de canal dans un message vers l'un desdits dispositifs de modulation par code (32-1..32-M) en fonction de ladite au moins une information d'identification de canal d'émission.

2. Unité conforme à la revendication 1, caractérisée en ce que lesdits premiers moyens pour associer associent, en outre, à chaque message reçu, en fonction desdites données d'identification, un rang d'intervalle temporel (it1-it4), un canal d'émission étant de type CDMA/TDMA et étant défini par un rang d'intervalle temporel dans une trame et une séquence de codage (Hm).

3. Unité conforme à la revendication 2, caractérisée en ce que lesdits premiers moyens pour associer associent à au moins deux paquets de canal distincts d'un même canal respectivement au moins deux informations d'identification de canal d'émission distinctes, lesdites deux informations d'identification identifiant un même rang d'intervalle temporel et deux séquences de codage respectives distinctes.

4. Unité conforme à la revendication 1, 2 ou 3, pour, en outre, former des messages à partir de signaux reçus, lesdits signaux étant reçus modulés par code, caractérisée en ce qu'elle comprend

une pluralité de dispositifs de démodulation (33-1..33-M) par code destinés à démoduler des paquets de canal dans les signaux reçus par des séquences de codage respectives, et des seconds moyens (382) pour associer, selon un processus inverse auxdits premiers moyens, à chaque paquet de canal qui est démodulé par code par une séquence de codage, des données de rang (TS N°, SC N°) de canal TDMA, et des moyens (381) pour former un message incluant ledit paquet de canal (DATA) et lesdites données de rang de canal TDMA .

5. Unité conforme à l'une quelconque des revendications 1 à 4, caractérisée en ce que lesdits messages de données successifs sont reçus en provenance d'un contrôleur de station de base (2a, 2b) d'un réseau de type G.S.M ou DCS 1800, pour être émis en mode à accès multiple à division de code.

6. Unité conforme à la revendication 5, caractérisée en ce que lesdits premiers moyens associent à chaque message reçu au moins une information d'identification de canal d'émission, en fonction en outre d'une information d'identification d'émetteur/récepteur (TRX).

7. Unité conforme à la revendication 5 ou 6, caractérisée en ce que lesdits moyens pour associer associent à des canaux dits communs (BCCH, CCCH) systématiquement la même séquence de codage (Hm).

8. Unité conforme à l'une quelconque des revendication précédentes, caractérisé en ce que lesdites séquences de codage (Hm) sont des séquences PN.

9. Unité conforme à l'une quelconque des revendication 1 à 7, caractérisé en ce que lesdites séquences de codage (Hm) sont des séquences de Hadamard.

8

# FIG. 1

CDMA

G.S.M.

EP 0 814 577 A1

# FIG. 2

EP 0 814 577 A1

# FIG. 3

FIG. 4A

FIG. 4B

# FIG. 5

# FIG. 6

# FIG. 7

# FIG. 8

# FIG. 9

FIG. 10

FIG. 11

# FIG. 12

| IT7 | IT0 | IT1 | IT2 | IT3 | IT4 | IT5 | IT6 | IT7 | IT0 | IT1 | IT2 | IT3 | IT4 | IT5 | IT6 | IT7 |

# FIG. 13A

EP 0 814 577 A1

# FIG. 13 B

ST

SS

it1 | it2 | it3 | it4

# FIG. 14

| CH.TYPE | T.S N° | S.CH N° | ——————— |
| --- | --- | --- | --- |
| | | | |
| | | | |
| DATA | | | |

**EP 0 814 577 A1**

**Office européen des brevets**

**RAPPORT DE RECHERCHE EUROPEENNE**

Numéro de la demande

EP 97 40 1358

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 95 23464 A (MOTOROLA INC)<br>* page 8, ligne 26 - page 9, ligne 4; figure 2 *<br>- - - | 1-9 | H04B7/26 |
| A | EP 0 658 991 A (NEC CORPORATION)<br>* colonne 7, ligne 31 - colonne 8, ligne 3; figures *<br>- - - | 1-9 | |
| A | US 5 369 664 A (TAKAHASHI ET AL.)<br>* colonne 3, ligne 32 - ligne 63; figures *<br>- - - | 1-9 | |
| A | US 5 260 967 A (SCHILLING) 9 novembre 1993<br>* colonne 6, ligne 17 - ligne 52 *<br>- - - | 1-9 | |
| A | US 4 799 252 A (EIZENHOEFFER ET AL.)<br>* colonne 4, ligne 45 - ligne 66; figures *<br>- - - | 1-9 | |
| A | EP 0 600 713 A (NOKIA MOBILE PHONES LTD ;NOKIA TELECOMMUNICATIONS OY (FI))<br>* colonne 6, ligne 29 - colonne 7, ligne 44; figures *<br>- - - - - | 1-9 | **DOMAINES TECHNIQUES RECHERCHES (Int.Cl.6)**<br><br>H04B<br>H04J<br>H04Q |

Le présent rapport a été établi pour toutes les revendications

| Lieu de la recherche | Date d'achèvement de la recherche | Examinateur |
|---|---|---|
| LA HAYE | 27 octobre 1997 | Gastaldi, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

18